# EUROPÄISCHE PATENTSCHRIFT

(11) **EP 3 137 539 B1**
(45) Veröffentlichungstag und Bekanntmachung des Hinweises auf die Patenterteilung: **04.04.2018**
(21) Anmeldenummer: 15714845.3
(22) Anmeldetag: 14.04.2015
(51) Int. Cl.: C08G 18/48, C08G 18/66, C08G 18/76, C08G 18/32, C08J 9/228, B05D 1/02, B05D 1/18, B05D 1/28, C08J 9/36, C09D 175/04

(54) **POLYURETHAN-PARTIKELSCHAUM MIT POLYURETHANBESCHICHTUNG**
POLYURETHANE PARTICLE FOAM WITH POLYURETHANE COATING
MOUSSE À PARTICULES EN POLYURÉTHANE DOTÉE D'UN REVÊTEMENT DE POLYURÉTHANE

(30) Priorität: 30.04.2014 EP 14166522
(43) Veröffentlichungstag der Anmeldung: 08.03.2017
(73) Patentinhaber: BASF SE, 67056 Ludwigshafen am Rhein (DE)
(72) Erfinder: PRISSOK, Frank, 49448 Lemförde (DE); HARMS, Michael, 49356 Diepholz (DE); VALLO, Martin, 49565 Bramsche (DE)
(74) Vertreter: BASF IP Association
(86) Internationale Anmeldenummer: PCT/EP2015/058013
(87) Internationale Veröffentlichungsnummer: WO 2015/165724

(56) Entgegenhaltungen:
- WO-A1-02/04208
- WO-A1-2007/082838
- US-A- 2 994 110
- US-A- 3 473 951

## Beschreibung

Die vorliegende Erfindung betrifft beschichtete Formkörper umfassend mindestens einen Formkörper aus geschäumten Partikeln aus mindestens einem Polyurethan (A) und mindestens eine Beschichtung aus mindestens einem Polyurethan (B), wobei Polyurethan (A) und Polyurethan (B) jeweils aus mindestens einem Polyol und mindestens einem Polyisocyanat aufgebaut sind und wobei mindestens 50 Gew.-% der zum Aufbau von Polyurethan (A) und Polyurethan (B) eingesetzten Polyolkomponente identisch sind und mindestens 50 Gew.-% der zum Aufbau von Polyurethan (A) und Polyurethan (B) eingesetzten mindestens einen Polyisocyanatkomponente identisch sind. Weiter betrifft die vorliegende Erfindung Verfahren zur Herstellung der erfindungsgemäßen beschichteten Formkörper sowie die Verwendung der erfindungsgemäßen beschichteten Formkörper für verschiedene Anwendungen.

Polyurethane werden heutzutage aufgrund ihres weiten Eigenschaftsprofils in einer Vielzahl von Anwendungen eingesetzt. Polyurethane können dabei sowohl in kompakter als auch in geschäumter Form eingesetzt werden, wobei ein sehr weiter Dichtebereich von kompakt mit einer Dichte größer 1,00 g/cm³ bis zu ca. 0,01 g/cm³ für geschäumte Körper möglich ist. Polyurethane können dabei beispielsweise in Form von Duromeren, Elastomeren, thermoplastischen Elastomeren (TPU), mikrozellulären Elastomeren, Integralschaumstoffen, Weichschaumstoffen, Hartschaumstoffen oder Halbhartschaumstoffen vorliegen. Durch Kombination von Polyurethanen mit anderen Materialien können auch Verbundmaterialien hergestellt werden, durch die das Einsatzgebiet des Werkstoffs "Polyurethan" noch erweitert wird. So ist es möglich, durch Einbringen von geschäumten Partikeln in eine Matrix aus Polyurethan Hybridmaterialien mit reduzierter Dichte und besonderen Eigenschaften zu erhalten und/oder die Materialkosten zu reduzieren.

Eine entsprechende Verarbeitung der Rezepturen zu niederdichten weichen Formteilen in Form eines ebenfalls geschlossenzelligen Systemschaums ist aufgrund des auftretenden Schrumpfens nicht möglich. Eine Kombination eines geschlossenzelligen Partikelschaums mit einer nahezu chemisch identischen Komponente, die als Systemschaum verarbeitet wird und eine gute Haftung auf dem Partikelschaum zeigt, wird in der Anmeldung WO 2008/087078 beschrieben. Es wird ein Produkt erhalten, das auch bei geringer Dichte schrumpffrei ist und im Vergleich zu einem reinen Systemschaum auf gleicher Basis bessere mechanische Eigenschaften zeigt. Die gute Haftung der offenzelligen auf der geschlossenzelligen Phase wird bedingt durch den chemisch identischen Aufbau.

Hochelastische, geschlossenzellige Schäume, wie Partikelschäume aus thermoplastischem Polyurethan werden beispielsweise auch in WO 2007/082838 offenbart. Diese zeigen gute mechanische Eigenschaften und hohe Rückprallelastizitäten. Sie lassen sich auf Formteilautomaten mittels Heißdampfverschweißung auf einfache und kostengünstige Weise zu Formteilen, z.B. für die Schuhindustrie, verarbeiten. Aufgrund der erforderlichen Dampfdüsen in der Form und den nach der Entformung sichtbaren Zwickelschweißnähten entsteht eine eher raue unebene Oberfläche, die für Sichtteilanwendungen weniger geeignet ist. Aufgrund der Rauigkeit verschmutzen helle Oberflächen zusätzlich stärker als glatte. Ein weiteres Problem bei Sichtteilen aus Polyurethanpartikelschäumen stellt die Einfärbbarkeit dar. Aufgrund der geringen Dichte der Schäume und einer im Gegensatz zu Systemschäumen kaum vorhandenen Formteilhaut ist eine pastellfarbene Farbgebung möglich, intensive Farbtöne durch Einfärbung in Masse scheitern an dem Herstellverfahren.

Eine der vorliegenden Erfindung zugrunde liegende Aufgabe war es, Formkörper bereitzustellen, die gute mechanische Eigenschaften aufweisen, beispielsweise Elastizität und Reißfestigkeit, und gleichzeitig widerstandsfähige und glatte Oberflächen.

Eine weitere der vorliegenden Erfindung zugrunde liegende Aufgabe war es, Materialien bzw. Verfahren zu deren Herstellung bereitzustellen, die gute mechanische Eigenschaften aufweisen und widerstandsfähige und glatte Oberflächen, die einfach eingefärbt werden können.

Die Aufgabe wird erfindungsgemäß gelöst durch beschichtete Formkörper umfassend
(a) mindestens einen Formkörper aus geschäumten Partikeln aus mindestens einem Polyurethan (A) und
(b) mindestens eine Beschichtung aus mindestens einem Polyurethan (B),
wobei Polyurethan (A) und Polyurethan (B) jeweils aus mindestens einem Polyol und mindestens einem Polyisocyanat aufgebaut sind und wobei mindestens 50 Gew.-% der zum Aufbau von Polyurethan (A) und Polyurethan (B) eingesetzten Polyolkomponente identisch sind und mindestens 50 Gew.-% der zum Aufbau von Polyurethan (A) und Polyurethan (B) eingesetzten mindestens einen Polyisocyanatkomponente identisch sind.

Zur Ermittlung der entsprechenden Gewichtsanteile wird wie folgt vorgegangen: Sämtliche Polyolkomponenten des Polyurethans (A) bzw. (B) werden ermittelt und aufgelistet, wobei die Gew.-% der einzelnen Polyole an der Gesamtheit der Polyole des jeweiligen Polyurethans, die 100 Gew.-% ergibt, bestimmt werden. Vergleicht man nun die einzelnen Polyole und ihre Gewichtsteile, so müssen mindestens 50 Gew.-% der Polyole des Polyurethans (A) auch in Polyurethan (B) enthalten sein und umgekehrt.

Entsprechende Berechnungen gelten für die Mengen an Polyisocyanat-Komponente.

Im Ergebnis geben die Zahlenwerte in Gew.-% den Grad der Übereinstimmung zwischen den Grundbausteinen der Polyurethane an. Diese Übereinstimmung ist erfindungsgemäß besonders groß, so dass der Formkörper aus geschäumten Partikeln und die Beschichtung entsprechend eine gute Anhaftung aneinander zeigen.

Erfindungsgemäß umfasst der beschichtete Formkörper mindestens einen Formkörper aus geschäumten Partikeln aus mindestens einem Polyurethan (A) und mindestens eine Beschichtung aus mindestens einem Polyurethan (B).

Erfindungsgemäß kann der Formkörper weitere Komponenten enthalten. Beispielsweise kann der Formkörper eine weitere Beschichtung aufweisen. Dabei ist es erfindungsgemäß möglich, dass der geschäumte Partikel oder eine der Beschichtungen, insbesondere die Beschichtung aus dem Polyurethan (B) weitere Hilfs- oder Zusatzstoffe enthalten, beispielsweise Füllstoffe, Additive, Pigmente oder Farben.

Die erfindungsgemäßen Formkörper zeigen im Vergleich zu den reinen Partikelschäumen eine widerstandsfähigere, glattere und nach Bedarf einfärbbare, insbesondere farbig einfärbbare Oberfläche. Dadurch, dass mindestens 50 Gew.-% der zum Aufbau von Polyurethan (A) und Polyurethan (B) eingesetzten Polyolkomponente identisch sind und mindestens 50 Gew.-% der zum Aufbau von Polyurethan (A) und Polyurethan (B) eingesetzten mindestens einen Polyisocyanatkomponente identisch sind, ergibt sich eine hervorragende Haftung der Phasen aneinander, die zu einer hohen mechanischen Festigkeit der Beschichtung beitragen.

Überraschenderweise wurde durch eine Kombination des Formkörpers aus einem Partikelschaum mit einer Beschichtung aus einem chemisch dem Partikelschaum hinreichend ähnlichen Polyurethan, das eine hervorragende Haftung auf diesem zeigt, ein Produkt erhalten, das das oben beschriebene Anforderungsprofil, insbesondere mit guten mechanischen Eigenschaften, erfüllt und eine abriebbeständige, glänzende und farbig deckende Beschichtung aufweist.

Im Rahmen der vorliegenden Erfindung kann die Dicke der Beschichtung in weiten Bereichen variieren. Vorzugsweise wird die Dicke der Beschichtung so gewählt, dass die Partikelstruktur des Formkörpers erhalten bleibt. Die Dicke der Beschichtung liegt erfindungsgemäß beispielsweise im Bereich von 50 bis 1000 µm, bevorzugt im Bereich von 100 bis 800 µm, weiter bevorzugt im Bereich von 250 bis 750 µm.

Demgemäß betrifft die vorliegende Erfindung gemäß einer weiteren Ausführungsform einen Formkörper wie zuvor beschrieben, wobei die Beschichtung eine Dicke im Bereich von 50 bis 1000 µm aufweist.

Durch die erfindungsgemäße hinreichende Ähnlichkeit, d.h. dass Polyurethan (A) und Polyurethan (B) jeweils aus mindestens einem Polyol und mindestens einem Polyisocyanat aufgebaut sind, und dabei mindestens 50 Gew.-% der zum Aufbau von Polyurethan (A) und Polyurethan (B) eingesetzten Polyolkomponente identisch sind, und mindestens 50 Gew.-% der zum Aufbau von Polyurethan (A) und Polyurethan (B) eingesetzten mindestens einen Polyisocyanatkomponente identisch sind, ist die Verbindung zwischen Trägerschaum und Beschichtung so gut, dass eine Trennung nach dem Austrocknen nicht mehr möglich ist.

Da das bei der Herstellung der erfindungsgemäßen Formkörper verwendete Lösungsmittel im Wesentlichen in gleichem Maße die Beschichtung und den Schaum löst bzw. anlöst, kommt es bei der Herstellung der erfindungsgemäßen Formkörper zu einer optimalen Haftung und Hautbildung auf der Schaumoberfläche.

Erfindungsgemäß umfasst der beschichtete Formkörper mindestens einen Formkörper aus geschäumten Partikeln aus mindestens einem Polyurethan (A) und mindestens eine Beschichtung aus mindestens einem Polyurethan (B). Gemäß einer bevorzugten Ausführungsform weist der erfindungsgemäße Formkörper neben dem Formkörper aus geschäumten Partikeln aus mindestens einem Polyurethan (A) und der Beschichtung aus mindestens einem Polyurethan (B) keine weiteren Komponenten auf. Demgemäß besteht der erfindungsgemäße beschichtete Formkörper aus einem Formkörper aus geschäumten Partikeln aus mindestens einem Polyurethan (A) und einer Beschichtung aus mindestens einem Polyurethan (B).

Dabei besteht der Formkörper aus geschäumten Partikeln aus mindestens einem Polyurethan (A), vorzugsweise aus geschäumten Partikeln aus genau einem Polyurethan (A). Die Beschichtung ist erfindungsgemäß aus mindestens einem Polyurethan (B), vorzugsweise aus genau einem Polyurethan (B).

Demgemäß betrifft die vorliegende Erfindung gemäß einer bevorzugten Ausführungsform beschichtete Formkörper bestehend aus
(a) einem Formkörper aus geschäumten Partikeln aus Polyurethan (A) und
(b) einer Beschichtung aus Polyurethan (B),
wobei Polyurethan (A) und Polyurethan (B) jeweils aus mindestens einem Polyol und mindestens einem Polyisocyanat aufgebaut sind und wobei mindestens 50 Gew.-% der zum Aufbau von Polyurethan (A) und Polyurethan (B) eingesetzten Polyolkomponente identisch sind und mindestens 50 Gew.-% der zum Aufbau von Polyurethan (A) und Polyurethan (B) eingesetzten mindestens einen Polyisocyanatkomponente identisch sind.

Erfindungsgemäß sind Polyurethan (A) und Polyurethan (B) jeweils aus mindestens einem Polyol und mindestens einem Polyisocyanat aufgebaut. Dabei sind mindestens 50 Gew.-% der zum Aufbau von Polyurethan (A) und Polyurethan (B) eingesetzten Polyolkomponente identisch und mindestens 50 Gew.-% der zum Aufbau von Polyurethan (A) und Polyurethan (B) eingesetzten mindestens einen Polyisocyanatkomponente identisch.

Vorzugsweise sind erfindungsgemäß mindestens 60 Gew.-% der zum Aufbau von Polyurethan (A) und Polyurethan (B) eingesetzten Polyolkomponente identisch, insbesondere mindestens 70 Gew.-%, besonders bevorzugt mindestens 85 Gew.-%.

Weiterhin sind erfindungsgemäß vorzugsweise mindestens 60 Gew.-% der zum Aufbau von Polyurethan (A) und Polyurethan (B) eingesetzten mindestens einen Polyisocyanatkomponente identisch, insbesondere mindestens 70 Gew.-%, besonders bevorzugt mindestens 85 Gew.-%.

Dabei ist es im Rahmen der vorliegenden Erfindung möglich, dass sich der Grad der Ähnlichkeit der eingesetzten Polyolkomponente vom Grad der Ähnlichkeit der Isocyanatkomponente unterscheidet, dass also beispielsweise mindestens 60 Gew.-% der zum Aufbau von Polyurethan (A) und Polyurethan (B) eingesetzten Polyolkomponente identisch sind und mindestens 70 Gew.-% der zum Aufbau von Polyurethan (A) und Polyurethan (B) eingesetzten mindestens einen Polyisocyanatkomponente identisch sind.

Erfindungsgemäß ist es jedoch bevorzugt, dass der Grad der Ähnlichkeit der eingesetzten Polyolkomponente und der Grad der Ähnlichkeit der Isocyanatkomponente im Wesentlichen gleich sind, d.h., dass beispielsweise mindestens 60 Gew.-% der zum Aufbau von Polyurethan (A) und Polyurethan (B) eingesetzten Polyolkomponente identisch sind und mindestens 60 Gew.-% der zum Aufbau von Polyurethan (A) und Polyurethan (B) eingesetzten mindestens einen Polyisocyanatkomponente identisch sind.

Gemäß einer bevorzugten Ausführungsform sind mindestens 70 Gew.-% der zum Aufbau von Polyurethan (A) und Polyurethan (B) eingesetzten Polyolkomponente identisch und mindestens 70 Gew.-% der zum Aufbau von Polyurethan (A) und Polyurethan (B) eingesetzten mindestens einen Polyisocyanatkomponente identisch. Gemäß einer weiter bevorzugten Ausführungsform sind mindestens 85 Gew.-% der zum Aufbau von Polyurethan (A) und Polyurethan (B) eingesetzten Polyolkomponente identisch und mindestens 85 Gew.-% der zum Aufbau von Polyurethan (A) und Polyurethan (B) eingesetzten mindestens einen Polyisocyanatkomponente identisch.

Demgemäß betrifft die vorliegende Erfindung gemäß einer weiteren Ausführungsform einen Formkörper wie zuvor beschrieben, wobei mindestens 85 Gew.-% der zum Aufbau von Polyurethan (A) und Polyurethan (B) eingesetzten Polyolkomponente identisch sind und mindestens 85 Gew.-% der zum Aufbau von Polyurethan (A) und Polyurethan (B) eingesetzten mindestens einen Polyisocyanatkomponente identisch sind.

Erfindungsgemäß sind die eingesetzten Polyurethane vorzugsweise thermoplastische Polyurethane. Demgemäß betrifft die vorliegende Erfindung gemäß einer weiteren Ausführungsform einen Formkörper wie zuvor beschrieben, wobei das mindestens eine Polyurethan (A) ein thermoplastisches Polyurethan ist.

Erfindungsgemäß werden Polyurethan (A) und Polyurethan (B) eingesetzt, wobei diese eine wie zuvor definierte hinreichende Ähnlichkeit aufweisen. Im Rahmen der vorliegenden Erfindung ist es bevorzugt, dass der Partikelschaum und die Beschichtung eine feste chemische Verbindung eingehen. Somit werden vorzugsweise solche Polyurethane eingesetzt, die im Herstellverfahren eine hinreichende Löslichkeit aufweisen und nach der Trocknung fest miteinander verbunden sind. Die Löslichkeit von Polyurethanen wird beispielsweise durch die Shore Härte oder den Vernetzungsgrad beeinflusst. Vorzugsweise werden demgemäß erfindungsgemäß Polyurethane eingesetzt, die eine Shore Härte oder einen Vernetzungsgrad aufweisen, die eine hinreichende Löslichkeit gewährleisten.

Vorzugsweise ist das erfindungsgemäß eingesetzte Polyurethan (B) ein thermoplastisches Polyurethan, insbesondere ein thermoplastisches Polyurethan mit einer Shore Härte von kleiner 98A, bestimmt gemäß DIN 53505, weiter bevorzugt mit einer Shore Härte von kleiner 90A, besonders bevorzugt mit einer Shore Härte von kleiner 85A, jeweils bestimmt gemäß DIN 53505.

Vorzugsweise weist das erfindungsgemäß eingesetzte Polyurethan (B) eine Shore Härte von größer 30A auf, bestimmt gemäß DIN 53505, weiter bevorzugt eine Shore Härte von größer 40A, besonders bevorzugt eine Shore Härte von größer 50A, jeweils bestimmt gemäß DIN 53505.

Vorzugsweise weist das erfindungsgemäß eingesetzte Polyurethan (B) eine Shore Härte im Bereich von 30A bis 98A auf, bestimmt gemäß DIN 53505, weiter bevorzugt eine Shore Härte im Bereich von 40A bis 90A, besonders bevorzugt eine Shore Härte im Bereich von 50A bis 85A, jeweils bestimmt gemäß DIN 53505.

Demgemäß betrifft die vorliegende Erfindung gemäß einer weiteren Ausführungsform einen Formkörper wie zuvor beschrieben, wobei das mindestens eine Polyurethan (B) ein thermoplastisches Polyurethan mit einer Shore-Härte A von kleiner 98A ist, bestimmt gemäß DIN 53505.

Polyurethan (A) und Polyurethan (B) sind aus mindestens einer Polyolkomponente und einer Polyisocyanatkomponente aufgebaut. Neben dem Polyol und dem Polyisocyanat können zur Herstellung der erfindungsgemäß eingesetzten Polyurethan beispielsweise noch weitere Komponenten wie Kettenverlängerungsmittel Katalysatoren und/oder übliche Hilfs- und/oder Zusatzstoffen eingesetzt werden.

Grundsätzlich können im Rahmen der vorliegenden Erfindung alle dem Fachmann bekannten geeigneten Polyole eingesetzt werden. Polyole sind dem Fachmann an sich bekannt und beispielsweise beschrieben im "Kunststoffhandbuch, Band 7, Polyurethane", Carl Hanser Verlag, 3. Auflage 1993, Kapitel 3.1.

Erfindungsgemäß können beispielsweise Polyesterole, Polyetherole und/oder Polycarbonatdiole eingesetzt werden, die üblicherweise auch unter dem Begriff "Polyole" zusammengefasst werden, mit zahlenmittleren Molekulargewichten von 500 bis 8.000, bevorzugt 600 bis 6.000, insbesondere 800 bis 4.000 g/mol, und bevorzugt einer mittleren Funktionalität von 1,8 bis 2,3, bevorzugt 1,9 bis 2,2, insbesondere 2. Erfindungsgemäß können auch Mischungen enthaltend mehrere Polyole eingesetzt werden. Ebenso können im Rahmen der vorliegenden Erfindung polymere oder niedermolekulare Diole eingesetzt werden. Erfindungsgemäß werden als Polyol vorzugsweise polymere Diole oder Diole eingesetzt.

Demgemäß betrifft die vorliegende Erfindung gemäß einer weiteren Ausführungsform einen Formkörper wie zuvor beschrieben, wobei das mindestens eine Polyol ausgewählt ist aus der Gruppe bestehend aus Polyetherdiolen und Polyesterdiolen.

Erfindungsgemäß geeignete Diole sind beispielsweise 1,4-Budandiol und 1,2-Etandiol.

Erfindungsgemäß geeignete polymeren Diole sind vorzugsweise Polyether- oder Polyesterdiole. Besonders bevorzugt wird als polymeres Diol im Rahmen der vorliegenden Erfindung Polytetrahydrofuran eingesetzt.

Polytetrahydrofuran wird nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden wie Tetrahydrofuran. Weiter können als Katalysatoren auch Multimetallcyanidverbindungen, sogenannte DMC-Katalysatoren, eingesetzt werden. Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polytetrahydrofurane besitzen vorzugsweise eine Funktionalität von 2 bis 3, vorzugsweise 2, und Molekulargewichte von 250 bis 8.000, vorzugsweise von 500 bis 4.000 g/mol, im thermoplastischen Polyurethan 600 bis 2.500 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 10 Kohlenstoffatomen, mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispiels 10 weise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z. B. ε-caprolacton oder Hydroxycarbonsäuren, z. B. ω-Hydroxycapronsäure. Besonders bevorzugt sind Polyester basierend auf Adipinsäure und 1,4-Butandiol.

Geeignete Polyesterpolyole besitzen beispielsweise eine Funktionalität von 2 bis 3, vorzugsweise eine Funktionalität von 2.

Weiter weisen geeignete Polyesterpolyole beispielsweise ein Molekulargewicht von 480 bis 3.000 auf, vorzugsweise 1.000 bis 3.000 g/mol, im thermoplastischen Polyurethan 500 bis 2.500 g/mol.

Weiter bevorzugt sind im Rahmen der vorliegenden Erfindung Polyesterdiole, bevorzugt Polyesterdiole auf der Basis von Adipinsäure und Butan-1,4-diol, mit einem zahlenmittleren Molekulargewicht zwischen 500 und 2500 g/mol, besonders bevorzugt auf 600 g/mol und 2.400 g/mol.

Als Polyisocyanat können im Rahmen der vorliegenden Erfindung alle dem Fachmann bekannten geeigneten Polyisocyanate eingesetzt werden.

Geeignete Polyisocyanate umfassen die aus dem Stand der Technik bekannten aliphatischen, cycloaliphatischen und aromatischen zwei- oder mehrwertigen Isocyanate sowie beliebige Mischungen daraus. Beispiele sind 4,4'-Diphenylmethandiisocyanat, 2,4'-Diphenylmethandiisocyanat, die Mischungen aus monomeren Diphenylmethandüsocyanaten und höherkernigen Homologen des Diphenylmethandiisocyanats (Polymer-MDI), Tetramethylendiisocyanat, Hexamethylendiisocyanat (HDI), Isophorondiisocyanat (IPDI), 4,4'-, 4,2- oder 2,2'-Methylendicyclohexyldiisocyanat (H12MDI), 2,4- oder 2,6- Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4'-MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Demgemäß betrifft die vorliegende Erfindung gemäß einer weiteren Ausführungsform einen Formkörper wie zuvor beschrieben, wobei das mindestens eine Polyisocyanat ausgewählt ist aus der Gruppe bestehend aus Diphenylmethandiisocyanat, Hexamethylendiisocyanat, 4,4'-Methylendicyclohexyldiisocyanat, und 2,4- oder 2,6-Toluylendiisocyanat.

Wie ausgeführt, können die erfindungsgemäß geeigneten Polyurethane weitere Aufbaukomponenten enthalten.

Als Kettenverlängerungsmittel können beispielsweise allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol- 1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.

Als geeignete Katalysatoren, welche insbesondere die Reaktion zwischen den Isocyanatgruppen und den Hydroxy-Gruppen beschleunigen, sind die nach dem Stand der Technik bekannten und üblichen tertiären Amine, wie z.B. Triethylamin, Dimethylcyclohexylamin, N-Methylmorpholin, N,N'- Dimethylpiperazin, 2-(Dimethylaminoethoxy)-ethanol, Diazabicyclo(2,2,2)-octan und ähnliche sowie insbesondere organische Metallverbindungen wie Titansäureester, Eisenverbindungen wie z.B. Eisen-(III)- acetylacetonat, Zinnverbindüngen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche einsetz-bar. Die Katalysatoren werden üblicherweise in Mengen von 0,0001 bis 0,1 Gew.- Teilen pro 100 Gew.-Teile Polyhydroxylverbindung eingesetzt.

Weiter können auch übliche Hilfsmittel und/oder Zusatzstoffe hinzugefügt werden. Genannt seien beispielsweise Treibmittel, oberflächenaktive Substanzen, Füllstoffe, Flammschutzmittel, Keimbildungsmittel, Oxidationsstabilisatoren, Gleit und Entformungshilfen, Farbstoffe und Pigmente, gegebenenfalls zusätzlich zu den erfindungsgemäßen Stabilisatorengemische weitere Stabilisatoren, z.B. gegen Hydrolyse, Licht, Hitze oder Verfärbung, anorganische und/oder organische Füllstoffe, Verstärkungsmittel und Weichmacher.

Die erfindungsgemäßen beschichteten Formkörper umfassen einen Formkörper aus Partikelschaum und eine Beschichtung.

Erfindungsgemäß sind die geschäumten Partikel aus Polyurethan vorzugsweise zumindest teilweise, besonders bevorzugt komplett geschlossenzellig.

Die Partikel aus Polyurethan, insbesondere aus thermoplastischem Polyurethan werden aus expandierbaren Partikeln, expandierten Partikeln oder in einem kontinuierlichen Verfahren auf einem Extruder hergestellt.

Die geschäumten Partikel bestehen dabei aus einem geschäumten Polyurethanmaterial.

Diese geschäumten Partikel haben im Rahmen der vorliegenden Erfindung vorzugsweise einen Durchmesser von 0,1 mm bis 10 cm, vorzugsweise von 0,5 mm bis 5 cm und besonders bevorzugt von 1 mm bis 2 cm und sind vorzugsweise kugelförmig oder ellipsoid. Bei nicht kugelförmigen, zum Beispiel ellipsoiden Partikeln, ist mit Durchmesser die längste Achse gemeint. Die geschäumten Partikel haben eine Dichte von vorzugsweise 0,005 bis 0,50 g/cm³, besonders bevorzugt von 0,01 bis 0,3 g/cm³ und insbesondere von 0,02 bis 0,2 g/cm³. Vorzugsweise weisen die geschäumten Partikel eine kompakte äußere Haut auf. Dabei ist unter einer kompakten Haut zu verstehen, dass die Schaumzellen im äußeren Bereich der geschäumten Partikel kleiner sind als in deren Innern. Besonders bevorzugt enthält der äußere Bereich der geschäumten Partikel keine Poren, und die Zellen der Partikel sind geschlossenzellig.

Der Formkörper aus Partikelschaum wird durch Verschweißen oder Verkleben des Partikelschaums erhalten und kann erfindungsgemäß jede beliebige Form aufweisen.

Die erfindungsgemäß auf den Formkörper aufgebrachte Beschichtung aus Polyurethan (B) kann weitere Komponenten enthalten, beispielsweise Pigmente oder Füllstoffe, Stabilisatoren, UV-Schutzmittel, Wachse oder Verarbeitungshilfsmittel, die die Beschaffenheit der Oberfläche verbessern.

Gemäß einem weiteren Aspekt betrifft die vorliegende Erfindung auch ein Verfahren zur Herstellung mindestens eines beschichteten Formkörpers, mindestens umfassend die Schritte
(i) Bereitstellen geschäumter Partikel aus mindestens einem thermoplastischen Polyurethan (A),
(ii) Verschweißen oder Verkleben der geschäumten Partikel in der gewünschten Form unter Erhalt eines Formkörpers,
(iii) Aufbringen einer Beschichtung enthaltend mindestens ein Polyurethan (B) auf dem Formkörper,
wobei Polyurethan (A) und Polyurethan (B) jeweils aus mindestens einem Polyol und mindestens einem Polyisocyanat aufgebaut sind und wobei mindestens 50 Gew.-% der zum Aufbau von Polyurethan (A) und Polyurethan (B) eingesetzten Polyolkomponente identisch sind und mindestens 50 Gew.-% der zum Aufbau von Polyurethan (A) und Polyurethan (B) eingesetzten mindestens einen Polyisocyanatkomponente identisch sind.

Gemäß Schritt (i) des erfindungsgemäßen Verfahrens werden geschäumter Partikel aus mindestens einem thermoplastischen Polyurethan (A) bereitgestellt.

Die Herstellung von Polyurethanen bzw. von geschäumten Partikeln aus thermoplastischen Polyurethanen ist an sich dem Fachmann bekannt. Die Partikel aus thermoplastischem Polyurethan werden üblicherweise aus expandierbaren Partikeln, expandierten Partikeln oder in einem kontinuierlichen Verfahren auf einem Extruder hergestellt. Geeignete Verfahren sind beispielsweise in WO 2007/082838 oder EP 10723971.7 beschrieben.

Diese geschäumten Partikel werden gemäß dem erfindungsgemäßen Verfahren dann verschweißt oder verklebt, wobei die Form und damit die Form des erhaltenen Formkörpers in weiten Bereichen variierbar ist. Geeignete Bedingungen zum Verschweißen oder Verkleben eines Partikelschaums sind dem Fachmann an sich bekannt.

Gemäß Schritt (iii) des erfindungsgemäßen Verfahrens wird eine Beschichtung enthaltend mindestens ein Polyurethan (B) auf dem gemäß Schritt (ii) erhaltenen Formkörper aufgebracht.

Dazu wird zunächst das Polyurethan (B) gelöst und eine Beschichtungslösung erhalten, die neben dem Polyurethan (B) und dem Lösungsmittel weitere Komponenten enthalten kann, beispielsweise Pigmente oder Füllstoffe. Generell kann die Lösung auf alle dem Fachmann bekannten Arten hergestellt werden. Geeignet sind beispielsweise Lösen auf dem Rollband, oder Lösen in einem Rührkessel. Sofern nötig, kann beim Herstellen der Lösung Wärme zugeführt werden. Beispielsweise kann das Lösen auch im erhitzten oder siedenden Lösungsmittel erfolgen. Erfindungsgemäß ist es auch möglich, dass zum Herstellen der Lösung mehr als ein Lösungsmittel eingesetzt werden, beispielsweise zwei Lösungsmittel, die nacheinander zugesetzt werden.

Ist die Beschichtungslösung mit Pigmenten oder Flüssigfarbstoff versetzt, wird eine farbige Beschichtung erhalten. Dabei können einzelne Bereiche des zu beschichtenden Formkörpers in unterschiedlichen Farben gefärbt werden. Beispielsweise sind auch Farbverläufe möglich oder der Farbton kann durch mehrmaligen Auftrag dunkler oder intensiver werden. Erfindungsgemäß können auch reine farblose, transparente Schichten aufgebracht werden um die Widerstandskraft, Abriebbeständigkeit des Formteiles zu erhöhen und die Oberflächenrauigkeit und Verschmutzungsneigung zu verringern. Auch eine Kombination aus einer farbigen Schicht oder einem farbigen Druck und einer nachfolgenden transparenten Beschichtung ist möglich.

Erfindungsgemäß wird die Beschichtungslösung auf den gemäß Schritt (ii) erhaltenen Formkörper aufgebracht, beispielsweise durch Streichen, Tauchen oder Sprühen, bevorzugt durch Streichen oder Sprühen

Weiter betrifft die vorliegende Erfindung gemäß einer weiteren Ausführungsform ein Verfahren zur Herstellung eines beschichteten Formkörpers wie zuvor beschrieben, wobei die Beschichtung gemäß Schritt (iii) in Form einer Lösung enthaltend mindestens ein Polyurethan (B) aufgebracht wird.

Demgemäß betrifft die vorliegende Erfindung gemäß einer weiteren Ausführungsform ein Verfahren zur Herstellung eines beschichteten Formkörpers wie zuvor beschrieben, wobei das Aufbringen gemäß Schritt (iii) durch Streichen, Tauchen oder Sprühen erfolgt.

Im Rahmen der vorliegenden Erfindung wird das eingesetzt Lösungsmittel so gewählt, dass zum einen das Polyurethan (B) in ausreichendem Maß gelöst wird, zum anderen dass es flüchtig genug ist, um ein Trocknen des beschichteten Formkörpers in einer für industrielle Verfahren sinnvollen Zeit erlaubt. Gleichzeitig wird das Lösungsmittel bevorzugt so gewählt, dass das Molekulargewicht des zur Beschichtung verwendeten Polyurethans (B) nicht abgebaut wird.

Die erfindungsgemäß eingesetzten Lösungsmittel sollten nicht oxidierend oder reduzierend wirken. Vorzugsweise werden polare oder stark polare Lösungsmittel verwendet. Der Siedepunkt des eingesetzten Lösungsmittels ist vorzugsweise kleiner als 150 °C, besonders bevorzugt kleiner als 100 °C.

Demgemäß betrifft die vorliegende Erfindung gemäß einer weiteren Ausführungsform ein Verfahren zur Herstellung eines beschichteten Formkörpers wie zuvor beschrieben, wobei als Lösungsmittel für das mindestens eine Polyurethan (B) ein Lösungsmittel eingesetzt wird, das das Molekulargewicht des mindestens einen Polyurethans (B) nicht abbaut.

Vorzugsweise wird das Lösungsmittel bevorzugt so gewählt, dass auch die Oberfläche des Formkörpers aus Partikelschaum angelöst wird und dass das Molekulargewicht des Polyurethans des Formkörpers aus Partikelschaum nicht abgebaut wird.

Erfindungsgemäß wird für die Beschichtungslösung ein leicht flüchtiges Lösungsmittel eingesetzt, beispielsweise THF, Ethylacetat, Methylethylketon oder Aceton, insbesondere THF und Ethylacetat, oder Mischungen dieser Lösungsmittel. Erfindungsgemäß ist es auch möglich, dass wässrige Verdünnungen, insbesondere wässrige Verdünnungen der genannten Lösungsmittel eingesetzt werden.

Demgemäß betrifft die vorliegende Erfindung gemäß einer weiteren Ausführungsform ein Verfahren zur Herstellung eines beschichteten Formkörpers wie zuvor beschrieben, wobei das Lösungsmittel ausgewählt ist aus der Gruppe bestehend aus Tetrahydrofuran, Ethylacetat und Methylethylketon.

Die Beschichtungslösung wird in einem Schritt oder in mehreren Schritten aufgebracht, wobei nach dem Trocknen eine Beschichtung mit der zuvor genannten Dicke erhalten wird. Verfahren zum Aufbringen der Beschichtung sind dem Fachmann grundsätzlich bekannt. Dabei werden erfindungsgemäß Lösungsmittel oder Lösungsmittelgemische derart ausgewählt, dass zum einen das Polyurethan gut gelöst werden kann, zum andern, dass das Lösungsmittel leicht wieder entfernt werden kann. Abhängig von der zu beschichtenden Fläche und der gewünschten Schichtdicke kann die Beschichtung auch in einem oder mehreren Schritten aufgebracht werden.

Die erfindungsgemäßen beschichteten Formkörper bzw. die mittels eines erfindungsgemäßen Verfahrens erhaltenen Formkörper weisen glatte Oberflächen auf und können in beliebiger Form hergestellt werden. Die beschichteten Formkörper können deckend eingefärbt werden und haben gute mechanische Eigenschaften.

Derartige beschichtete Formkörper eignen sich für die Verwendung in der Schuh- und Sportindustrie, als Sohlen, Zwischensohlen, Sichtteilen auf Sportgeräten, Matten, Dämpfungselemente und Laufbahnen. Beispielsweise können die beschichteten Formkörper als Schuhsohle, Fahrradsattel, Polsterungen, Matratzen, Unterlagen, Griffen, Schutzfolien, in Bauteilen im Automobilinnen- und -außenbereich, in Bällen und Sportgeräten oder als Bodenbelag, insbesondere für Sportflächen, Leichtathletiklaufbahnen, Sportbahnen, Kinderspielplätze und Gehwege eingesetzt werden.

Demgemäß betrifft die vorliegende Erfindung die Verwendung eines beschichteten Formkörpers wie zuvor beschrieben oder eines beschichteten Formkörpers erhältlich oder erhalten nach einem erfindungsgemäßen Verfahren als Schuhsohle, Fahrradsattel, Polsterungen, Matratzen, Unterlagen, Griffen, Schutzfolien, in Bauteilen im Automobilinnen- und -außenbereich, in Bällen und Sportgeräten oder als Bodenbelag, insbesondere für Sportflächen, Leichtathletiklaufbahnen, Sporthallen, Kinderspielplätze und Gehwege.

Durch die glatten Oberflächen, die gut eingefärbt werden können sowie die hohe mechanische Belastbarkeit der erfindungsgemäßen beschichteten Formkörper eignen sich diese insbesondere für die Verwendung als sichtbares Bauteil.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken.
1. Beschichteter Formkörper umfassend
   (a) mindestens einen Formkörper aus geschäumten Partikeln aus mindestens einem Polyurethan (A) und
   (b) mindestens eine Beschichtung aus mindestens einem Polyurethan (B),
   wobei Polyurethan (A) und Polyurethan (B) jeweils aus mindestens einem Polyol und mindestens einem Polyisocyanat aufgebaut sind und wobei mindestens 50 Gew.-% der zum Aufbau von Polyurethan (A) und Polyurethan (B) eingesetzten Polyolkomponente identisch sind und mindestens 50 Gew.-% der zum Aufbau von Polyurethan (A) und Polyurethan (B) eingesetzten mindestens einen Polyisocyanatkomponente identisch sind.
2. Formkörper gemäß Ausführungsform 1, wobei mindestens 85 Gew.-% der zum Aufbau von Polyurethan (A) und Polyurethan (B) eingesetzten Polyolkomponente identisch sind und mindestens 85 Gew.-% der zum Aufbau von Polyurethan (A) und Polyurethan (B) eingesetzten mindestens einen Polyisocyanatkomponente identisch sind.
3. Formkörper gemäß Ausführungsform 1 oder 2, wobei das mindestens eine Polyurethan (A) ein thermoplastisches Polyurethan ist.
4. Formkörper gemäß einer der Ausführungsformen 1 bis 3, wobei das mindestens eine Polyurethan (B) ein thermoplastisches Polyurethan mit einer Shore-Härte A von kleiner 98A ist, bestimmt gemäß DIN 53505.
5. Formkörper gemäß einer der Ausführungsformen 1 bis 4, wobei das mindestens eine Polyol ausgewählt ist aus der Gruppe bestehend aus Polyetherdiolen und Polyesterdiolen.
6. Formkörper gemäß einer der Ausführungsformen 1 bis 5, wobei das mindestens eine Polyisocyanat ausgewählt ist aus der Gruppe bestehend aus Diphenylmethandiisocyanat, Hexamethylendiisocyanat, 4,4'-Methylendicyclohexyldiisocyanat, und 2,4- oder 2,6-Toluylendiisocyanat.
7. Formkörper gemäß einer der Ausführungsformen 1 bis 6, wobei die Beschichtung eine Dicke im Bereich von 50 bis 1000 µm aufweist.
8. Verfahren zur Herstellung mindestens eines beschichteten Formkörpers, mindestens umfassend die Schritte
   (i) Bereitstellen geschäumter Partikel aus mindestens einem thermoplastischen Polyurethan (A),
   (ii) Verschweißen oder Verkleben der geschäumten Partikel in der gewünschten Form unter Erhalt eines Formkörpers,
   (iii) Aufbringen einer Beschichtung enthaltend mindestens ein Polyurethan (B) auf dem Formkörper,
   wobei Polyurethan (A) und Polyurethan (B) jeweils aus mindestens einem Polyol und mindestens einem Polyisocyanat aufgebaut sind und wobei mindestens 50 Gew.-% der zum Aufbau von Polyurethan (A) und Polyurethan (B) eingesetzten Polyolkomponente identisch sind und mindestens 50 Gew.-% der zum Aufbau von Polyurethan (A) und Polyurethan (B) eingesetzten mindestens einen Polyisocyanatkomponente identisch sind.
9. Verfahren gemäß Ausführungsform 8, wobei die Beschichtung gemäß Schritt (iii) in Form einer Lösung enthaltend mindestens ein Polyurethan (B) aufgebracht wird.
10. Verfahren gemäß Ausführungsform 8 oder 9, wobei das Aufbringen gemäß Schritt (iii) durch Streichen, Tauchen oder Sprühen erfolgt.
11. Verfahren gemäß Ausführungsform 9 oder 10, wobei als Lösungsmittel für das mindestens eine Polyurethan (B) ein Lösungsmittel eingesetzt wird, das das Molekulargewicht des mindestens einen Polyurethans (B) nicht abbaut.
12. Verfahren gemäß einer der Ausführungsformen 9 bis 11, wobei das Lösungsmittel ausgewählt ist aus der Gruppe bestehend aus Tetrahydrofuran, Ethylacetat und Methylethylketon.
13. Verwendung eines beschichteten Formkörpers gemäß einer der Ausführungsformen 1 bis 7 oder eines beschichteten Formkörpers erhältlich nach einem Verfahren gemäß einer der Ausführungsformen 8 bis 12 als Schuhsohle, Fahrradsattel, Polsterungen, Matratzen, Unterlagen, Griffen, Schutzfolien, in Bauteilen im Automobilinnen- und -außenbereich, in Bällen und Sportgeräten oder als Bodenbelag, insbesondere für Sportflächen, Leichtathletiklaufbahnen, Sporthallen, Kinderspielplätze und Gehwege.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Herstellung der Proben

Ein thermoplastisches Polyurethan wurde in einem organischen Lösemittel gelöst. Dieser Lösung können unterschiedliche Farbpigmente zugesetzt werden. Die Verarbeitung dieser TPU-Farblösung erfolgt, wie bei einem handelsüblichen Farb-Lack, durch Aufpinseln. Dank des hohen Dampfdruckes des Lösemittels bleibt nach dem Verdampfen der dünn aufgetragenen Lösung eine homogene, elastische Beschichtung zurück. Diese Beschichtung zeichnet sich durch ihre gute Haftung zum beschichteten Material, eine griffige Haptik und besondere Optik aus. Die Farbe der Beschichtung kann über die Auswahl der eingesetzten Farbpigmente frei gewählt werden. Eine transparente Beschichtung ist ebenfalls möglich.

In den folgenden Beispielen werden die Herstellung und die Eigenschaften der TPU-Beschichtungen beschrieben. Die erfindungsgemäßen Lösungen wurden im Labor auf einem elektrischen Rollband hergestellt.

### 1.1 Beispiel 1 (erfindungsgemäß) transparent

Ein auf Polyterahydrofuran, Butandiol und monomerem MDI basierendes thermoplastisches Polyurethangranulat mit der Shore-Härte 70A wurde im Masseverhältnis von 20 Teilen zusammen mit 80 Teilen Tetrahydrofuran in ein Schraubdeckelglas eingewogen. Zum Lösen wurde das Gebinde auf einem Rollband für mindestens 12h bei Raumtemperatur durch mischt. Nach dem vollständigen Lösen des TPU-Granulates wurden 100 Teile Ethylacetat zugesetzt und bis zur Homogenisierung weiter durch mischt. Diese Lösung wurde mit einem Pinsel auf verschweißte ETPU-Platten aufgetragen. Aus diesen so beschichteten Platten wurden Prüfkörper entnommen, an denen die mechanischen und optischen Prüfungen durchgeführt wurden.

### 1.2 Beispiel 2 (erfindungsgemäß) schwarz

Ein auf Polyterahydrofuran, Butandiol und monomerem MDI basierendes thermoplastisches Polyurethangranulat mit der Shore-Härte 70A wurde im Masseverhältnis von 20 Teilen zusammen mit 80 Teilen Tetrahydrofuran in ein Schraubdeckelglas eingewogen. Zum Lösen wurde das Gebinde auf einem Rollband für mindestens 12h bei Raumtemperatur durchmischt. Nach dem vollständigen Lösen des TPU-Granulates wurden 2,5 Teile schwarze Isopurfarbpaste und 100 Teile Ethylacetat zugesetzt und bis zur Homogenisierung weiter durchmischt. Diese Lösung wurde mit einem Pinsel auf verschweißte ETPU-Platten aufgetragen. Aus diesen so beschichteten Platten wurden Prüfkörper entnommen, an denen die mechanischen und optischen Prüfungen durchgeführt wurden.

### 1.3 Beispiel 3 (erfindungsgemäß) blau

Ein auf Polyterahydrofuran, Butandiol und monomerem MDI basierendes thermoplastisches Polyurethangranulat mit der Shore-Härte 70A wurde im Masseverhältnis von 20 Teilen zusammen mit 80 Teilen Tetrahydrofuran in ein Schraubdeckelglas eingewogen. Zum Lösen wurde das Gebinde auf einem Rollband für mindestens 12h bei Raumtemperatur durchmischt. Nach dem vollständigen Lösen des TPU-Granulates wurden 2,5 Teile blaues Farbpigment und 100 Teile Ethylacetat zugesetzt und bis zur Homogenisierung weiter durchmischt. Diese Lösung wurde mit einem Pinsel auf verschweißte ETPU-Platten aufgetragen. Aus diesen so beschichteten Platten wurden Prüfkörper entnommen, an denen die mechanischen und optischen Prüfungen durchgeführt wurden.

### 2. Ergebnisse

Die erhaltenen Prüfkörper wurden getestet. Die Ergebnisse sind in Tabelle 1 zusammengefasst.

**Tabelle 1**

| | **Vorschrift *** | unbeschichtet | Schwarz beschichtet | Blau beschichtet | Transparent beschichtet |
|---|---|---|---|---|---|
| Dichte | DIN EN ISO 1183-1, A | 0,409 | 0,422 | 0,415 | 0,426 |
| Zugfestigkeit | DIN 53504 | 3 | 3 | 3 | 3 |
| Glanzmessung (60°) | DIN 67530 | 8 | 19,5 | 10,1 | 11,3 |
| Glanzmessung (85°) | DIN 67530 | 8,7 | 11,3 | 7,3 | 7,3 |
| Reißdehnung (Rnd.) | DIN 53504 | 240 | 260 | 290 | 310 |
| Abrieb | DIN ISO 4649 | 236 | 234 | 240 | 176 |
| Reibungskoeffizient | *Ares Rheometer | 0,302 | 0,291 | 0,289 | 0,272 |

Die Ergebnisse zeigen, dass die erfindungsgemäß beschichteten Formkörper eine Verbesserung des Glanzes, der Reißdehnung des Reibungskoeffizienten aufweisen. Die in den Beispielen getesteten dünnen Beschichtungen haben keinen Einfluss auf die Zugfestigkeit der Prüfkörper.

Eine Erhöhung des Glanzes und der Reißdehnung, sowie eine Verringerung der Reibung wird als vorteilhafter betrachtet.

### * Parameter des Ares Rheometers:

Methode: Oberflächenreibungsmessung
Reibung auf Normkachel mit Natriumlaurylsulfatlösung
Anpressdruck. 244g auf 110,7 mm²
Probenvorbereitung: gereinigt mit H₂0:Ethanol 50:50

## Patentansprüche

1. Beschichteter Formkörper umfassend
(a) mindestens einen Formkörper aus geschäumten Partikeln aus mindestens einem Polyurethan (A) und
(b) mindestens eine Beschichtung aus mindestens einem Polyurethan (B),
wobei Polyurethan (A) und Polyurethan (B) jeweils aus mindestens einem Polyol und mindestens einem Polyisocyanat aufgebaut sind und wobei mindestens 50 Gew.-% der zum Aufbau von Polyurethan (A) und Polyurethan (B) eingesetzten Polyolkomponente identisch sind und mindestens 50 Gew.-% der zum Aufbau von Polyurethan (A) und Polyurethan (B) eingesetzten mindestens einen Polyisocyanatkomponente identisch sind.

2. Formkörper gemäß Anspruch 1, wobei mindestens 85 Gew.-% der zum Aufbau von Polyurethan (A) und Polyurethan (B) eingesetzten Polyolkomponente identisch sind und mindestens 85 Gew.-% der zum Aufbau von Polyurethan (A) und Polyurethan (B) eingesetzten mindestens einen Polyisocyanatkomponente identisch sind.

3. Formkörper gemäß Anspruch 1 oder 2, wobei das mindestens eine Polyurethan (A) ein thermoplastisches Polyurethan ist.

4. Formkörper gemäß einem der Ansprüche 1 bis 3, wobei das mindestens eine Polyurethan (B) ein thermoplastisches Polyurethan mit einer Shore-Härte A von kleiner 98A ist, bestimmt gemäß DIN 53505.

5. Formkörper gemäß einem der Ansprüche 1 bis 4, wobei das mindestens eine Polyol ausgewählt ist aus der Gruppe bestehend aus Polyetherdiolen und Polyesterdiolen.

6. Formkörper gemäß einem der Ansprüche 1 bis 5, wobei das mindestens eine Polyisocyanat ausgewählt ist aus der Gruppe bestehend aus Diphenylmethandiisocyanat, Hexamethylendiisocyanat, 4,4'-Methylendicyclohexyldiisocyanat, und 2,4- oder 2,6-Toluylendiisocyanat.

7. Formkörper gemäß einem der Ansprüche 1 bis 6, wobei die Beschichtung eine Dicke im Bereich von 50 bis 1000 µm aufweist.

8. Verfahren zur Herstellung mindestens eines beschichteten Formkörpers, mindestens umfassend die Schritte
(i) Bereitstellen geschäumter Partikel aus mindestens einem thermoplastischen Polyurethan (A),
(ii) Verschweißen oder Verkleben der geschäumten Partikel in der gewünschten Form unter Erhalt eines Formkörpers,
(iii) Aufbringen einer Beschichtung enthaltend mindestens ein Polyurethan (B) auf dem Formkörper,
wobei Polyurethan (A) und Polyurethan (B) jeweils aus mindestens einem Polyol und mindestens einem Polyisocyanat aufgebaut sind und wobei mindestens 50 Gew.-% der zum Aufbau von Polyurethan (A) und Polyurethan (B) eingesetzten Polyolkomponente identisch sind und mindestens 50 Gew.-% der zum Aufbau von Polyurethan (A) und Polyurethan (B) eingesetzten mindestens einen Polyisocyanatkomponente identisch sind.

9. Verfahren gemäß Anspruch 8, wobei die Beschichtung gemäß Schritt (iii) in Form einer Lösung enthaltend mindestens ein Polyurethan (B) aufgebracht wird.

10. Verfahren gemäß Anspruch 8 oder 9, wobei das Aufbringen gemäß Schritt (iii) durch Streichen, Tauchen oder Sprühen erfolgt.

11. Verfahren gemäß Anspruch 9 oder 10, wobei als Lösungsmittel für das mindestens eine Polyurethan (B) ein Lösungsmittel eingesetzt wird, das das Molekulargewicht des mindestens einen Polyurethans (B) nicht abbaut.

12. Verfahren gemäß einem der Ansprüche 9 bis 11, wobei das Lösungsmittel ausgewählt ist aus der Gruppe bestehend aus Tetrahydrofuran, Ethylacetat und Methylethylketon.

13. Verwendung eines beschichteten Formkörpers gemäß einem der Ansprüche 1 bis 7 oder eines beschichteten Formkörpers erhältlich nach einem Verfahren gemäß einem der Ansprüche 8 bis 12 als Schuhsohle, Fahrradsattel, Polsterungen, Matratzen, Unterlagen, Griffen, Schutzfolien, in Bauteilen im Automobilinnen- und -außenbereich, in Bällen und Sportgeräten oder als Bodenbelag, insbesondere für Sportflächen, Leichtathletiklaufbahnen, Sporthallen, Kinderspielplätze und Gehwege.

## Claims

1. A coated shaped article comprising
(a) at least one shaped article comprising foamed beads comprising at least one polyurethane (A) and
(b) at least one coating comprising at least one polyurethane (B),
wherein polyurethane (A) and polyurethane (B) are each constructed from at least one polyol and at least one polyisocyanate and wherein not less than 50 wt% of the polyol component used for constructing polyurethane (A) and polyurethane (B) is identical and not less than 50 wt% of the at least one polyisocyanate component used for constructing polyurethane (A) and polyurethane (B) is identical.

2. The shaped article according to claim 1 wherein not less than 85 wt% of the polyol component used for constructing polyurethane (A) and polyurethane (B) is identical and not less than 85 wt% of the at least one polyisocyanate component used for constructing polyurethane (A) and polyurethane (B) is identical.

3. The shaped article according to claim 1 or 2 wherein the at least one polyurethane (A) is a thermoplastic polyurethane.

4. The shaped article according to any of claims 1 to 3 wherein the at least one polyurethane (B) is a thermoplastic polyurethane having a Shore hardness A of below 98A, as determined to German standard specification DIN 53505.

5. The shaped article according to any of claims 1 to 4 wherein the at least one polyol is selected from the group consisting of polyether diols and polyester diols.

6. The shaped article according to any of claims 1 to 5 wherein the at least one polyisocyanate is selected from the group consisting of diphenylmethane diisocyanate, hexamethylene diisocyanate, 4,4'-methylenedicyclohexyl diisocyanate and 2,4- or 2,6-tolylene diisocyanate.

7. The shaped article according to any of claims 1 to 6 wherein the coating has a thickness in the range from 50 to 1000 µm.

8. A process for producing at least one coated shaped article, which process comprises at least the steps of
(i) providing foamed beads comprising at least one thermoplastic polyurethane (A),
(ii) fusing or adhering the foamed beads in the desired shape to obtain a shaped article,
(iii) applying a coating comprising at least one polyurethane (B) to the shaped article,
wherein polyurethane (A) and polyurethane (B) are each constructed from at least one polyol and at least one polyisocyanate and wherein not less than 50 wt% of the polyol component used for constructing polyurethane (A) and polyurethane (B) is identical and not less than 50 wt% of the at least one polyisocyanate component used for constructing polyurethane (A) and polyurethane (B) is identical.

9. The process according to claim 8 wherein the coating of step (iii) is applied in the form of a solution comprising at least one polyurethane (B).

10. The process according to claim 8 or 9 wherein the applying of step (iii) is effected by brushing, dipping or spraying.

11. The process according to claim 9 or 10 wherein the solvent used for the at least one polyurethane (B) does not break down the molecular weight of the at least one polyurethane (B).

12. The process according to any of claims 9 to 11 wherein the solvent is selected from the group consisting of tetrahydrofuran, ethyl acetate and methyl ethyl ketone.

13. The method of using a coated shaped article according to any of claims 1 to 7 or a coated shaped article obtainable by a process according to any of claims 8 to 12 as shoe sole, bicycle saddle, cushioning, mattresses, underlays, grips, protective foils, in structural components for the automotive interior and exterior, in balls and sports implements or as floorcovering, in particular for sports surfaces, athletic running tracks, sports halls, playgrounds and footpaths.

## Revendications

1. Corps moulé revêtu, comprenant :
(a) au moins un corps moulé constitué de particules moussées d'au moins un polyuréthane (A) et
(b) au moins un revêtement en au moins un polyuréthane (B),
le polyuréthane (A) et le polyuréthane (B) étant chacun formés à partir d'au moins un polyol et d'au moins un polyisocyanate, et au moins 50 % en poids du composant polyol utilisé pour la formation du polyuréthane (A) et du polyuréthane (B) étant identiques et au moins 50 % en poids dudit au moins un composant polyisocyanate utilisé pour la formation du polyuréthane (A) et du polyuréthane (B) étant identiques.

2. Corps moulé selon la revendication 1, dans lequel au moins 85 % en poids du composant polyol utilisé pour la formation du polyuréthane (A) et du polyuréthane (B) sont identiques et au moins 85 % en poids dudit au moins un composant polyisocyanate utilisé pour la formation du polyuréthane (A) et du polyuréthane (B) sont identiques.

3. Corps moulé selon la revendication 1 ou 2, dans lequel ledit au moins un polyuréthane (A) est un polyuréthane thermoplastique.

4. Corps moulé selon l'une quelconque des revendications 1 à 3, dans lequel ledit au moins un polyuréthane (B) est un polyuréthane thermoplastique ayant une dureté Shore A de moins de 98A, déterminée selon DIN 53505.

5. Corps moulé selon l'une quelconque des revendications 1 à 4, dans lequel ledit au moins un polyol est choisi dans le groupe constitué par les polyéther-diols et les polyester-diols.

6. Corps moulé selon l'une quelconque des revendications 1 à 5, dans lequel ledit au moins un polyisocyanate est choisi dans le groupe constitué par le diisocyanate de diphénylméthane, le diisocyanate d'hexaméthylène, le diisocyanate de 4,4'-méthylène-dicyclohexyle et le diisocyanate de 2,4- ou 2,6-toluylène.

7. Corps moulé selon l'une quelconque des revendications 1 à 6, dans lequel le revêtement présente une épaisseur dans la plage allant de 50 à 1 000 µm.

8. Procédé de fabrication d'au moins un corps moulé revêtu, comprenant au moins les étapes suivantes :
(i) la préparation de particules moussées en au moins un polyuréthane thermoplastique (A),
(ii) le soudage ou le collage des particules moussées en la forme souhaitée pour obtenir un corps moulé,
(iii) l'application d'un revêtement contenant au moins un polyuréthane (B) sur le corps moulé,
le polyuréthane (A) et le polyuréthane (B) étant chacun formés à partir d'au moins un polyol et d'au moins un polyisocyanate, et au moins 50 % en poids du composant polyol utilisé pour la formation du polyuréthane (A) et du polyuréthane (B) étant identiques et au moins 50 % en poids dudit au moins un composant polyisocyanate utilisé pour la formation du polyuréthane (A) et du polyuréthane (B) étant identiques.

9. Procédé selon la revendication 8, dans lequel le revêtement selon l'étape (iii) est appliqué sous la forme d'une solution contenant au moins un polyuréthane (B).

10. Procédé selon la revendication 8 ou 9, dans lequel l'application selon l'étape (iii) a lieu par enduction, immersion ou pulvérisation.

11. Procédé selon la revendication 9 ou 10, dans lequel un solvant qui ne réduit pas le poids moléculaire dudit au moins un polyuréthane (B) est utilisé en tant que solvant pour ledit au moins un polyuréthane (B).

12. Procédé selon l'une quelconque des revendications 9 à 11, dans lequel le solvant est choisi dans le groupe constitué par le tétrahydrofurane, l'acétate d'éthyle et la méthyléthylcétone.

13. Utilisation d'un corps moulé revêtu selon l'une quelconque des revendications 1 à 7 ou d'un corps moulé revêtu pouvant être obtenu par un procédé selon l'une quelconque des revendications 8 à 12 en tant que semelle de chaussure, selle de vélo, rembourrages, matelas, supports, poignées, films protecteurs, dans des composants dans l'espace intérieur et extérieur d'automobiles, dans des balles et des appareils de sport ou en tant que revêtement de sol, notamment pour surfaces de sport, pistes d'athlétisme, salles de sport, terrains de jeux pour enfants et trottoirs.
